# EUROPÄISCHE PATENTSCHRIFT

(11) **EP 1 452 408 B1**
(45) Veröffentlichungstag und Bekanntmachung des Hinweises auf die Patenterteilung: **02.11.2006**
(21) Anmeldenummer: 04003962.0
(22) Anmeldetag: 21.02.2004
(51) Int. Cl.: B60R 21/34

(54) **Anordnung einer Frontklappe an einem Fahrzeug**
Mounting system for a hood for a vehicle
Dispositif pour le capot d'un véhicule

(30) Priorität: 28.02.2003 DE 10308752
(43) Veröffentlichungstag der Anmeldung: 01.09.2004
(73) Patentinhaber: Bayerische Motoren Werke Aktiengesellschaft, 80809 München (DE)
(72) Erfinder: Juling, Ullrich, 83209 Prien am Chiemsee (DE); Dirndorfer, Albin, Dr., 85375 Neufahrn (DE); Köstler, Ulrich, 85241 Hebertshausen (DE); Tietel, Andreas, 81375 München (DE); Knechtel, Marcus, 85774 Unterföhring (DE)

(56) Entgegenhaltungen:
- EP-A- 1 104 728
- DE-A- 19 721 565
- DE-A- 19 957 872
- GB-A- 2 373 218
- GB-A- 2 373 219

## Beschreibung

Die Erfindung betrifft eine Anordnung einer Frontklappe an einem Fahrzeug gemäß des Oberbegriffs des Patentanspruchs 1.

Um bei einer Kollision eines Fußgängers oder Radfahrers mit einem Kraftfahrzeug das Ausmaß von Verletzungen, insbesondere im Brust- und Kopfbereich, zu minimieren, ist es allgemein bekannt, die Frontklappe im hinteren und / oder im vorderen Bereich anzuheben. Hierdurch wird ein so großer Abstand der Frontklappe zu einer steifen Unterstruktur des Fahrzeugs (Motor, Federbeinaufnahmen, etc.) erreicht, dass ein ausreichender Deformationsweg zur Verfügung steht, um den Aufprall des Fußgängers oder Radfahrers auf ein verträgliches Maß zu verzögern.

Aus der GB 2 373 219' A ist bereits eine Anordnung einer Frontklappe an einem Fahrzeug mit zumindest einer Anhebevorrichtung bekannt, durch die bei einer detektierten Kollision des Fahrzeugs mit einem Fußgänger die Frontklappe gegenüber der geschlossenen Stellung im hinteren Bereich angehoben wird. Die Anhebevorrichtung weist ein Deformationselement auf, das sich beim Anheben der Frontklappe plastisch verformt.

Darüber hinaus offenbart die GB 2 373 218 A eine Anhebevorrichtung, die aus einem Ober- und einem Unterteil besteht, die beim Anheben durch zumindest einen Aktuator auseinander gedrückt werden, wobei das Deformationselement an dem Ober- und Unterteil angebracht ist.

Ferner ist aus der DE 197 21 565 A1 eine Anordnung einer Frontklappe an einem Fahrzeug bekannt, die zum normalen Öffnen und Schließen um eine horizontale, in Fahrtrichtung gesehen hinten liegende Drehachse schwenkbar ist. Im hinteren Bereich ist eine Anhebevorrichtung vorgesehen, die die Frontklappe anhebt, wenn ein Aufprall eines Fußgängers von einer Sensoreinrichtung detektiert wurde. Dazu weist die Anhebevorrichtung eine mechanisch vorgespannte Feder auf, die sich zum Anheben der Frontklappe schlagartig entspannt, nachdem sie von einer Entriegelungsvorrichtung freigegeben wurde. Durch die Aufprallenergie des Fußgängers wird zum einen die Frontklappe verbeult, zum anderen werden die Federn wieder teilweise zusammengedrückt, sodass die Frontklappe sich wieder etwas absenkt. Dadurch wird der Aufprall deutlich gedämpft, sodass sich die Verletzungsgefahr für den Fußgänger verringert.

Aufgabe der Erfindung ist es, eine einfache Anordnung einer Frontklappe an einem Fahrzeug zu schaffen, die Fußgänger oder Radfahrer bei einer Kollision mit dem Fahrzeug schützt.

Diese Aufgabe wird durch die Merkmale des Patentanspruchs 1 gelöst.

Erfindungsgemäß weist eine Anordnung einer Frontklappe an einem Fahrzeug zumindest eine Anhebevorrichtung auf, durch die bei einer detektierten Kollision des Fahrzeugs mit einem Fußgänger oder Radfahrer die Frontklappe gegenüber der geschlossenen Stellung im hinteren und / oder vorderen Bereich angehoben wird. Die Anhebevorrichtung weist mindestens ein Deformationselement auf, das sich beim Anheben der Frontklappe plastisch verformt, und das durch die Aufprallenergie des Fußgängers oder Radfahrers auf die angehobene Frontklappe zumindest teilweise wieder zurückverformt werden kann. Das Deformationselement kann den bisher üblichen Einsatz von Federn ersetzen, da durch das Zusammenstauschen des zuvor gelängten Deformationselementes ähnliche dämpfende Eigenschaften erzielt werden können, um den Aufprall des Fußgängers oder Radfahrers auf die Frontklappe abzufangen. Eine besonders einfache Variante ergibt sich, wenn das Deformationselement aus einem U-förmigen Bauteil, wie beispielsweise einem U-förmigen Blechabschnitt oder einem U-förmigen metallischen Schmiede- oder Gussbauteil, besteht. Beim Anheben der Frontklappe wird das U-förmige Bauteil zu einer V-Form aufgebogen. Durch die Aufprallenergie des Fußgängers oder Radfahrers auf die angehobene Frontklappe kann das aufgebogene Bauteil zumindest teilweise wieder zurückgebogen werden, wobei es annähernd wieder eine U-Form annehmen kann. Alternativ besteht das Deformationselement aus einem wellen- oder zickzackförmigen Bauteil, das beim Anheben ziehharmonika-artig gestreckt wird. Dies entspricht quasi einer Reihenschaltung mehrerer U-förmiger Bauteile. Dadurch kann bei kompakter Bauweise des Deformationselementes dennoch eine große Hubhöhe der Anhebevorrichtung realisiert werden.

Günstigerweise besteht die Anhebevorrichtung zumindest aus einem Ober- und einem Unterteil, die beim Anheben durch zumindest einen Aktuator auseinander gedrückt werden, wobei das Deformationselement an dem Ober- und dem Unterteil angebracht ist. Das Deformationselement kann zugleich zur Führung des Ober- und des Unterteils zueinander dienen.

Der mindestens eine Aktuator muss genügend Energie zur Verfügung stellen, um schnell das Deformationselement zu längen und die Frontklappe anzuheben. Dafür sind pyrotechnische Aktuatoren besonders geeignet. Pyrotechnische Aktuatoren zeichnen sich dadurch aus, dass sie innerhalb kürzester Zeit viel Energie freisetzen können.

Die erfindungsgemäße Anordnung einer Frontklappe an einem Fahrzeug ermöglicht eine besonders einfache Realisierung eines Fußgängeraufprallschutzes. In der Anhebevorrichtung sind keine vorgespannten Federn mehr erforderlich.

In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:
- Fig. 1: eine perspektivische Ansicht einer Anhebevorrichtung einer Frontklappe mit einem integrierten Deformationselement in einer Grundstellung,
- Fig. 2: eine perspektivische Ansicht der Anhebevorrichtung aus Fig. 1 ohne ein Oberteil,
- Fig. 3: eine perspektivische Ansicht der Anhebevorrichtung aus Fig. 1 in einer angehobenen Stellung,
- Fig. 4: einen Längsschnitt durch die Anhebevorrichtung aus Fig. 1 und
- Fig. 5: einen Längsschnitt durch die Anhebevorrichtung aus Fig. 3.

Eine Frontklappe ist - in Fahrtrichtung gesehen - im hinteren Bereich an eine Scharniervorrichtung angelenkt. Die Scharniervorrichtung ist über zumindest eine Anhebevorrichtung 1 mit einer Fahrzeugkarosserie verbunden. Die Frontklappe kann auf bekannte Weise zum Öffnen und Schließen um die Scharniervorrichtung verschwenkt werden.

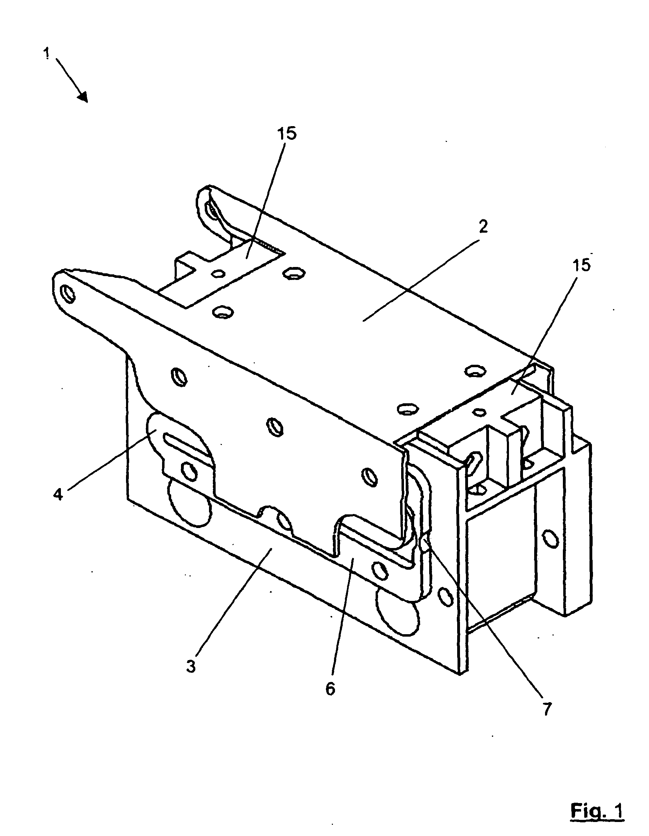

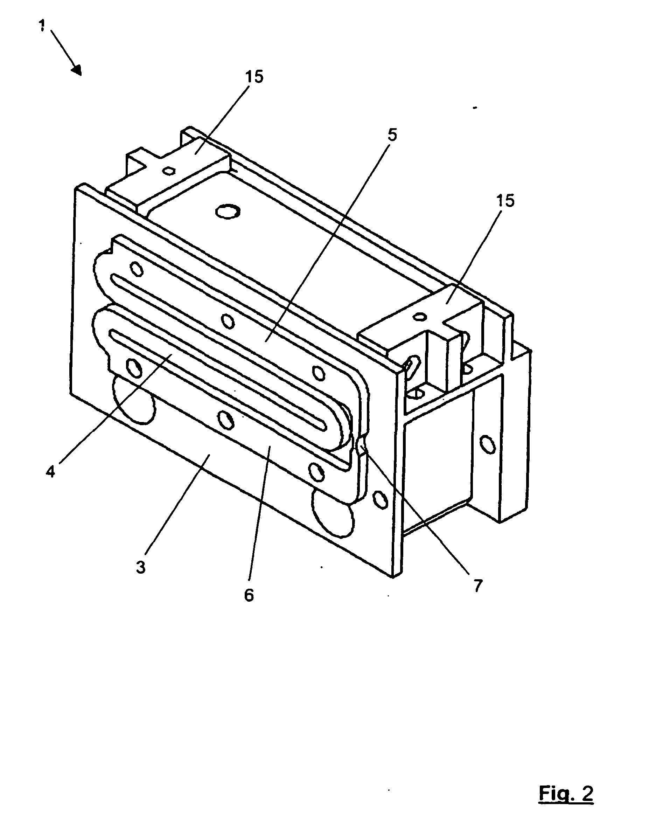

In Fig. 1 ist die Anhebevorrichtung 1 in einer Grundstellung gezeigt. Zu sehen ist ein Oberteil 2 aus einem Blech, das mit der Scharniervorrichtung verbunden ist, und ein Unterteil 3, das ein Druckgussteil ist und mit der Fahrzeugkarosserie verbunden ist. Das Ober- und das Unterteil 2 und 3 sind an zwei einander gegenüberliegenden Seiten jeweils über ein Deformationselement 4 miteinander verbunden. Ein solches metallisches Deformationselement 4 ist in **Fig. 2** gut sichtbar, da hier die Anhebevorrichtung 1 ohne das Oberteil 2 dargestellt ist. Das Deformationselement 4 ist ein in einer Ebene wellenförmig verlaufendes Bauteil, mit einem oberen und einem unteren Endabschnitt 5 und 6, deren freie Enden über einen schmalen Steg 7 miteinander verbunden sind. Der schmale Steg 7 ist dabei als Sollbruchstelle ausgelegt. Der obere Endabschnitt 5 ist fest mit dem Oberteil 2 verbunden, während der untere Endabschnitt 6 fest mit dem Unterteil 3 verbunden ist.

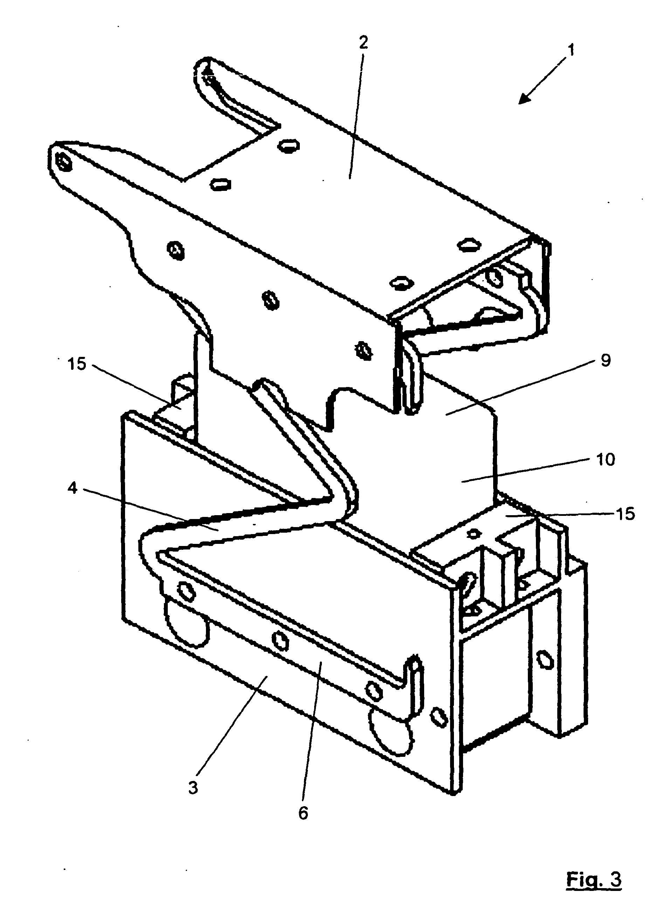

Beim Anheben werden durch einen Aktuator das Ober- und das Unterteil 2 und 3 auseinander gedrückt. Dabei zerreißt der Steg 7 und die beiden seitlichen Deformationselemente 4 werden ziehharmonikaartig auseinander gebogen, wie es in **Fig. 3** dargestellt ist. Die Frontklappe wird nun durch die auseinandergebogenen Deformationselemente 4 in der angehobenen Stellung gehalten, bis der Fußgänger oder Radfahrer auf der Frontklappe aufprallt. Durch die kinetische Energie des Aufpralls wird zum einen die Frontklappe in Richtung des Aufpralls verbogen, zum anderen werden die Deformationselemente 4 wieder zusammengestaucht. Die Deformationselemente 4 dämpfen somit den Aufschlag des Fußgängers oder Radfahrers und tragen dazu bei, das Verletzungsrisiko zu verringern.

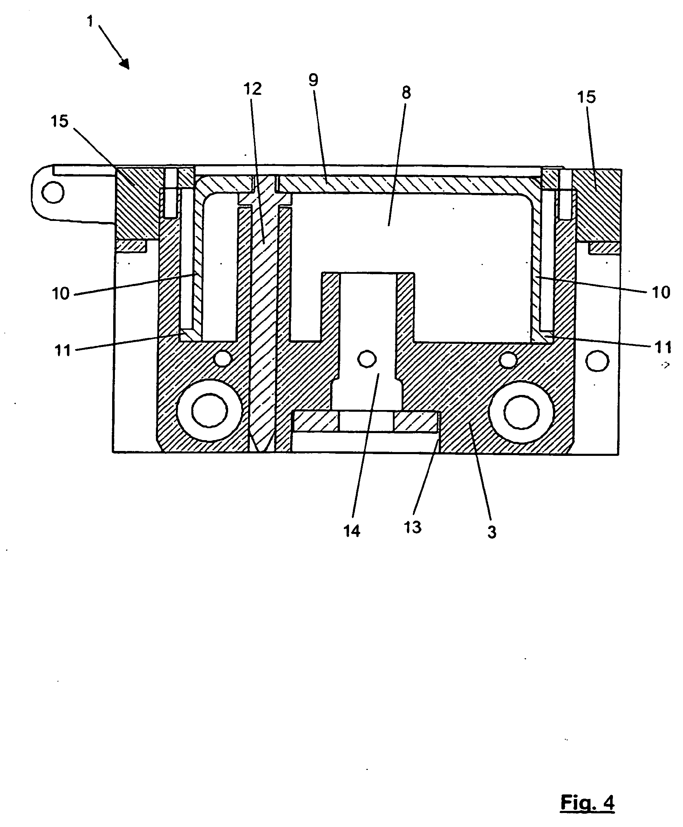

Der genaue Aufbau der Anhebevorrichtung 1 wird in einem Längsschnitt deutlich, wie er in Fig. 4 gezeigt ist. Das Unterteil 3 ist wannenartig mit einer großen Aussparung 8 in der Mitte ausgestaltet. Diese Aussparung 8 ist oben mit einer Art Kolben 9 verschlossen, der einteilig eine umlaufende Wand 10 aufweist, die am unteren Rand leicht auskragt. Diese Auskragung 11 ist passend seitlich in der Aussparung 8 geführt. Zusätzlich ist am Kolben 9 ein Führungsstift 12 angebracht, der in einer passenden Bohrung des Unterteils 3 geführt ist. Unmittelbar über dem Kolben 9 befindet sich das Oberteil 2, das in dem Längsschnitt nicht dargestellt ist. Über eine weitere Bohrung 13 ragt von unten eine pyrotechnische Zündpatrone 14 als Aktuator in die Aussparung 8 hinein.

Kurz vor einem möglichen Aufprall eines Fußgängers oder Radfahrers auf der Frontklappe wird die pyrotechnische Zündpatrone 14 gezündet. Das innerhalb kürzester Zeit entstehende Gasvolumen drückt explosionsartig den Kolben 9 nach oben. Dabei wird der Kolben 9 über die Auskragung 11 der umlaufenden Wand 10 in der Aussparung 8 und über den Führungsstift 12 in der Bohrung im Unterteil 3 geführt. Der Kolben 9 drückt auf das Oberteil 2 und hebt dieses an. Dabei reisst der Steg 7 der Deformationselemente 4 und diese werden verformt.

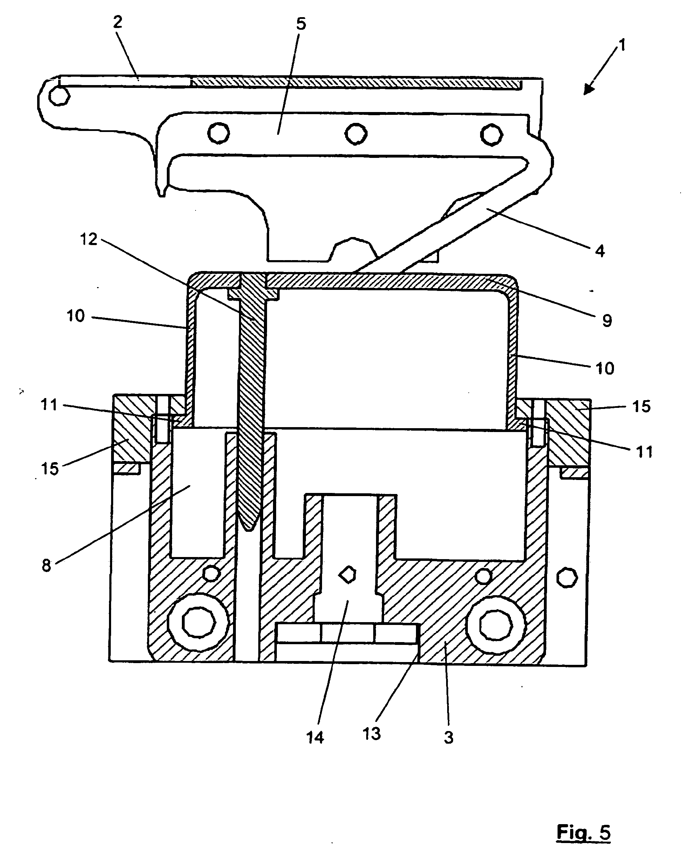

Am oberen Rand des Unterteils 3 sind Anschläge 15 aufgeschraubt, die den maximalen Hub des Kolbens 9 begrenzen. Der Hub erfolgt allerdings durch die pyrotechnische Zündpatrone 14 derart schlagartig, dass allein durch die Wucht das Oberteil 2 noch ein Stück weiter angehoben wird, wobei eine weitere Verformung der Deformationselemente 4 erfolgt. Diese vollständig angehobene Position ist in **Fig. 5** dargestellt.

Wenn nun die Frontklappe über zumindest eine solche Anhebevorrichtung 1 sich in einer angehobenen Position befindet, kann sie den Aufprall eines Fußgängers oder Radfahrers abfangen. Dabei kann sich zum einen die Frontklappe nachgiebig verbeulen, zum anderen kann das Ober- und das Unterteil 2 und 3 der Anhebevorrichtung 1 wieder zusammengedrückt werden. Dabei werden die beiden Deformationselemente 4 wieder plastisch zusammengedrückt und nehmen so Energie auf. Somit steht die Anhebehöhe der Frontklappe zumindest teilweise als Verzögerungsweg wieder zur Verfügung.

Um eine einmal genutzte Anhebevorrichtung 1 wiederverwenden zu können, müssen die Zündpatrone 14 und die Deformationselemente 4 ausgetauscht werden.

## Patentansprüche

1. Anordnung einer Frontklappe an einem Fahrzeug, mit zumindest einer Anhebevorrichtung, durch die bei einer detektierten Kollision des Fahrzeugs mit einem Fußgänger oder Radfahrer die Frontklappe gegenüber der geschlossenen Stellung im hinteren und / oder vorderen Bereich angehoben wird, wobei die Anhebevorrichtung (1) mindestens ein Deformationselement (4) aufweist, das sich beim Anheben der Frontklappe plastisch verformt, und das durch die Aufprallenergie des Fußgängers oder Radfahrers auf die angehobene Frontklappe zumindest teilweise wieder zurückverformt werden kann, und wobei das Deformationselement (4) aus einem U-förmigen Bauteil besteht, das beim Anheben zu einer V-Form aufgebogen wird, oder aus einem wellen- oder zickzackförmigen Bauteil besteht, das beim Anheben ziehharmonikaartig gestreckt wird, **dadurch gekennzeichnet, dass** die beiden freien Enden des Deformationselements (4) in der nicht angehobenen Stellung der Anhebevorrichtung (1) mit einem schmalen Steg (7) miteinander verbunden sind, der eine Sollbruchstelle aufweist.

2. Anordnung nach Anspruch 1, **dadurch gekennzeichnet, dass** die Anhebevorrichtung (1) zumindest aus einem Ober- und einem Unterteil (3 und 2) besteht, die beim Anheben durch zumindest einen Aktuator (14) auseinander gedrückt werden, wobei das Deformationselement (4) an dem Ober- und dem Unterteil (3 und 2) angebracht ist.

3. Anordnung nach Anspruch 2, **dadurch gekennzeichnet, dass** der Aktuator (14) pyrotechnisch arbeitet.

4. Anordnung nach Anspruch 3, **dadurch gekennzeichnet, dass** der pyrotechnische Aktuator (14) von außen in eine Aussparung (8) des Unterteils (3) hineinragt, die mit einem verlagerbaren Kolben (9) verschlossen ist, wobei der Kolben (9) nach dem Zünden des Aktuators (14) auf das Oberteil (2) drückt und dieses anhebt.

## Claims

1. A bonnet arrangement on a vehicle, comprising at least one lifting device whereby, on detection of a collision between the vehicle and a pedestrian or cyclist, the back and/or front of the bonnet is raised above the closed position, wherein the lifting device (1) comprises at least one deformation element (4) which, when the bonnet is raised, is plastically deformed and can be at least partly returned to shape by the impact of the pedestrian or cyclist on the raised bonnet, wherein the deformation element (4) comprises a U-shaped component which when raised is bent into a V, or a corrugated or zigzag component which when raised is stretched like a concertina, **characterised in that** when the lifting device (1) is in the non-lifted position, the two free ends of the deformation element (4) are connected by a narrow web (7) which forms a set breaking place.

2. An arrangement according to claim 1, **characterised in that** the lifting device (1) comprises at least a top part (3) and a bottom part (2) which when raised are pressed apart by at least one actuator (14), wherein the deformation element (4) is mounted on the top part (3) and bottom part (2).

3. An arrangement according to claim 2, **characterised in that** the actuator (14) is pyrotechnic.

4. An arrangement according to claim 3, **characterised in that** the pyrotechnic actuator (14) projects from the exterior into a recess (8) in the bottom part (3) which is closed by a movable plunger or piston (9), wherein the piston (9) presses and raises the top part (2) after the actuator (14) has been ignited.

## Revendications

1. Dispositif pour le capot d'un véhicule, comprenant au moins un dispositif de soulèvement permettant de soulever le capot de sa position fermée à l'arrière et/ou à l'avant lorsqu'une collision est détectée entre le véhicule et un piéton ou un cycliste, le dispositif de soulèvement (1) présentant au moins un élément de déformation (4) qui se déforme plastiquement lorsque le capot se soulève et qui peut être redéformé au moins partiellement par l'énergie provoquée par le choc du piéton ou du cycliste sur le capot soulevé, et dans lequel l'élément de déformation (4) comporte un composant en forme de U qui se relève en forme en V lors du soulèvement, ou bien un composant ondulé ou en forme de zig-zag qui s'étire lors du soulèvement à la manière d'un accordéon,
**caractérisé en ce que**
lorsque le dispositif de soulèvement (1) est dans la position non soulevée, les deux extrémités libres de l'élément de déformation (4) sont reliées à une barrette étroite (7) présentant une résistance mécanique moindre.

2. Dispositif selon la revendication 1,
**caractérisé en ce que**
le dispositif de soulèvement (1) comporte au moins une partie supérieure et une partie inférieure (3 et 2) repoussées l'une de l'autre par au moins un actionneur (14) pendant le soulèvement, l'élément de déformation (4) étant disposé sur la partie supérieure et la partie inférieure (3 et 2).

3. Dispositif selon la revendication 2,
**caractérisé en ce que**
l'actionneur (14) a un fonctionnement pyrotechnique.

4. Dispositif selon la revendication 3,
**caractérisé en ce que**
l'actionneur pyrotechnique (14) dépasse de l'extérieur dans une découpe (8) de la partie inférieure (3) qui est refermée par un piston mobile (9) qui pousse la partie supérieure (2) et soulève celle-ci après l'allumage de l'actionneur (14).
